Europäisches Patentamt

European Patent Office

Office européen des brevets

(19)

(11) EP 0 891 565 B1

(12) EUROPÄISCHE PATENTSCHRIFT

(45) Veröffentlichungstag und Bekanntmachung des Hinweises auf die Patenterteilung:
**29.08.2001 Patentblatt 2001/35**

(21) Anmeldenummer: **97919317.4**

(22) Anmeldetag: **03.04.1997**

(51) Int Cl.⁷: $G02B\ 1/04$, $G02B\ 1/00$, $G02F\ 1/35$

(86) Internationale Anmeldenummer:
**PCT/EP97/01678**

(87) Internationale Veröffentlichungsnummer:
**WO 97/38333 (16.10.1997 Gazette 1997/44)**

(54) **OPTISCHE BAUTEILE MIT GRADIENTENSTRUKTUR UND VERFAHREN ZU DEREN HERSTELLUNG**

OPTICAL COMPONENTS WITH A GRADED-INDEX STRUCTURE, AND METHOD OF MANUFACTURING SUCH COMPONENTS

COMPOSANTS OPTIQUES A STRUCTURE A GRADIENT D'INDICE ET LEUR PROCEDE DE FABRICATION

(84) Benannte Vertragsstaaten:
**AT BE CH DE ES FR GB IT LI NL SE**

(30) Priorität: **04.04.1996 DE 19613645**

(43) Veröffentlichungstag der Anmeldung:
**20.01.1999 Patentblatt 1999/03**

(73) Patentinhaber: **INSTITUT FÜR NEUE MATERIALIEN GEM. GMBH**
**66123 Saarbrücken (DE)**

(72) Erfinder:
• **SCHMIDT, Helmut**
**D-66130 Saarbrücken (DE)**
• **KRUG, Herbert**
**Harrison City, PA 15636 (US)**
• **OLIVEIRA, Peter, W.**
**66111 Saarbrücken (DE)**
• **SEPEUR, Stefan**
**D-66787 Wadgassen (DE)**

(74) Vertreter: **Barz, Peter, Dr. et al**
**Patentanwalt**
**Kaiserplatz 2**
**80803 München (DE)**

(56) Entgegenhaltungen:
EP-A- 0 414 001    WO-A-93/06508
WO-A-93/07179    WO-A-96/00969

EP 0 891 565 B1

**Beschreibung**

Die vorliegende Erfindung betrifft optische Bauteile mit Gradientenstruktur, insbesondere optische Bauteile mit einem Stoffgradienten, der durch nanoskalige Teilchen hervorgerufen wird, und ein Verfahren zur Herstellung derartiger optischer Bauteile.

Die elektrophoretische Abscheidung von Teilchen in einer Suspension beruht auf dem Vermögen der Teilchen, im elektrischen Feld zu wandern und sich in Abhängigkeit von der Polarität ihrer Oberflächenladung an einer der Elektroden abzuscheiden. Das Diffusionsprofil ist dabei u.a. abhängig von der Größe und Verteilung der Teilchen sowie der Viskosität des Mediums.

Erfolgen die diffusiven Vorgänge in einer Matrix, die anschließend ausgehärtet werden kann, ist es möglich, das jeweilige Diffusionsprofil einzufrieren und so ein Gradientenmaterial herzustellen.

Erfindungsgemäß wurde gefunden, daß ganz allgemein die durch eine Potentialdifferenz beliebiger Art hervorgerufene gerichtete Diffusion (Wanderung) von Teilchen, insbesondere nanoskaliger Teilchen, in einer flüssigen, (vorzugsweise thermisch und/oder photochemisch) härtbaren Matrix von geeigneter Viskosität (d.h. einer Viskosität, die die Diffusion der Teilchen (noch) erlaubt) zur Herstellung von optischen Bauteilen mit Stoffgradienten-Struktur ausgenutzt werden kann, wenn man nach Einstellung des gewünschten Diffusionsprofils der nanoskaligen Teilchen dieses Diffusionsprofil durch Härtung der Matrixphase einfriert.

Gegenstand der vorliegenden Erfindung sind somit optische Bauteile mit Gradientenstruktur, in denen ein Stoffgradient (der z.B. einen Brechwert-Gradienten bedingen kann) durch nanoskalige Teilchen, die in einer festen Matrix eingebettet sind, hervorgerufen wird.

Gegenstand der vorliegenden Erfindung ist ferner ein Verfahren zur Herstellung dieser optischen Bauteile, bei dem man unter Ausnutzung einer Potentialdifferenz in einer flüssigen, härtbaren Matrixphase dispergierte nanoskalige Teilchen in der Matrixphase wandern läßt, was zur Ausbildung eines Stoffgradienten führt, und anschließend die Matrixphase unter Beibehaltung des Stoffgradienten härtet.

Die treibende Kraft, die zur gerichteten Wanderung (Diffusion) der Teilchen in der Matrix führt, kann zum Beispiel über ein elektrisches Feld (wie bei der Elektrophorese), ein chemisches (Konzentrations-)Potential oder ein Grenzflächenpotential erzeugt werden.

Soll die Potentialdifferenz über ein elektrisches Feld erzeugt werden, kann man zum Beispiel so vorgehen, daß man die flüssige, härtbare Matrixphase mit darin dispergierten nanoskaligen Teilchen, die eine Oberflächenladung tragen, zwischen zwei Elektroden (Anode und Kathode) bringt und die nanoskaligen Teilchen dadurch veranlaßt, in Richtung der Elektrode zu wandern, die die zu deren Oberflächenladung entgegengesetzte Polarität aufweist. Die Oberflächenladung auf den nanoskaligen Teilchen kann zum Beispiel durch Einstellung eines pH-Wertes, der eine Dissoziation von auf der Oberfläche der nanoskaligen Teilchen befindlichen Gruppen hervorruft (z.B. $COOH \rightarrow COO^-$, $Metall-OH \rightleftharpoons Metall-O^-$), erzeugt werden. Selbstverständlich setzt diese Vorgehensweise voraus, daß die Viskosität der Matrix beim Anlegen eines elektrischen Feldes eine merkliche Diffusion der nanoskaligen Teilchen ermöglicht. Nachdem sich das gewünschte Diffusionsprofil eingestellt hat, wird dieses durch Härten der Matrix unter Bildung eines Festkörpers quasi eingefroren, wodurch ein optisches Bauteil mit Stoffgradienten-Struktur hergestellt werden kann.

Ein chemisches Konzentrationspotential kann beispielsweise folgendermaßen erzeugt werden. Bei der lokalen (z.B. thermisch und/oder photochemisch induzierten) Polymerisation von Spezies mit Kohlenstoff-Kohlenstoff-Mehrfachbindungen, Epoxid-Ringen usw. führt die Polymerisation zu einer Verarmung an funktionellen Gruppen in den Bereichen, in denen die Polymerisation stattfindet. (Der Ausdruck "Polymerisation", wie er hierin verwendet wird, soll nicht nur die Polymerisation im eigentlichen Sinne, sondern auch Polyadditions- und Polykondensationsreaktionen einschließen.) Dies führt zu einer Diffusion von Spezies mit noch nicht umgesetzten funktionellen Gruppen in die (erwärmten bzw. belichteten) Bereiche, in denen die Polymerisation stattgefunden hat, um die chemische Potentialdifferenz auszugleichen. Bei Photopolymeren ist dieser Effekt als "Colburn-Haines-Effekt" bekannt. Diese gerichtete Diffusion mit anschließender Polymerisation führt in den erwärmten bzw. belichteten Bereichen zu einer Erhöhung der Dichte und somit zu einer Erhöhung des Brechwertes. Bei organischen Monomeren ist diese Änderung jedoch gering, da die sich einstellende geringe Dichteänderung nur einen geringen Beitrag zur Molrefraktion liefert. Dies gilt jedoch nicht für nanoskalige Teilchen, an deren Oberfläche sich zur Polymerisation befähigte reaktive Gruppen befinden. In diesem Fall kann der Brechwertgradient durch Diffusion der nanoskaligen Teilchen im chemischen Potential deutlich erhöht werden und es sind Gradientenmaterialien erhältlich, wenn man nach der Diffusion die Matrixphase härtet, d. h. zum Beispiel das gesamte System einer thermisch und/oder photochemisch induzierten Polymerisation unterzieht. Aufgrund der bereits erfolgten Immobilisierung der diffundierten nanoskaligen Teilchen (durch Polymerisation) bleibt hierbei der Stoffgradient erhalten. Selbstverständlich ist auch bei dieser Ausführungsform des erfindungsgemäßen Verfahrens eine wichtige Voraussetzung, daß die flüssige Matrixphase eine ausreichende Diffusion der an ihrer Oberfläche mit reaktiven (polymerisierbaren) Gruppen versehenen nanoskaligen Teilchen erlaubt, d.h. die Viskosität der Matrixphase nicht zu hoch ist.

Eine weitere Möglichkeit zur Erzeugung einer Potentialdifferenz, die zu einer Diffusion von (an der Oberfläche) mit geeigneten Gruppen modifizierten nanoskaligen Teilchen in einer Matrixphase geeigneter Viskosität unter Ausbildung eines Stoffgradienten führt, besteht darin, sich die Inkompatibilität zwischen der Oberfläche der nanoskaligen Teilchen und der flüssigen Matrixphase zunutze zu machen. Wenn die nanoskaligen Teilchen zum Beispiel an ihrer Oberfläche hydrophobe Gruppen wie beispielsweise fluorierte (Alkyl)gruppen tragen und die Matrixphase einen hydrophilen bzw. weniger hydrophoben Charakter aufweist, führt das Auftragen der flüssigen hydrophilen Matrixphase mit darin dispergierten hydrophoben nanoskaligen Teilchen auf ein Substrat dazu, daß die hydrophoben Teilchen an die Oberfläche der Schicht wandern, die zur geringsten Systemenergie führt. In der Regel ist dies die Grenzfläche mit der Luft, so daß sich die hydrophoben bzw. hydrophob beschichteten Teilchen an der Oberfläche der Beschichtung anreichern und an der Grenzfläche zum Substrat abreichern, was nach Aushärtung der Beschichtung dazu führt, daß sowohl eine gute Haftung zwischen Schicht und Substrat sichergestellt wird als auch eine leicht zu reinigende Niederenergieoberfläche entsteht.

Um bei dieser Ausführungsform des erfindungsgemäßen Verfahrens eine Entmischung von (hydrophiler) Matrixphase und hydrophoben nanoskaligen Teilchen bereits vor Auftragung auf ein Substrat zu vermeiden, kann zum Beispiel so vorgegangen werden, daß man der Matrixphase ein Kompatibilisierungsmittel zusetzt, das nach erfolgter Auftragung auf das Substrat entfernt (z.B. verdampft) wird oder im Verlauf der Härtung der Matrixphase in diese stabil eingebaut wird.

Im folgenden werden die im erfindungsgemäßen Verfahren einsetzbaren Materialien näher beschrieben.

Die im erfindungsgemäßen Verfahren einsetzbaren nanoskaligen Teilchen weisen vorzugsweise einen Durchmesser von nicht mehr als 100 nm, insbesondere nicht mehr als 50 nm und besonders bevorzugt nicht mehr als 20 nm auf. Hinsichtlich der Untergrenze gibt es keine besonderen Beschränkungen, wenngleich diese Untergrenze aus praktischen Gründen in der Regel bei 0,5 nm, insbesondere 1 nm und häufiger 2 nm liegt.

Die nanoskaligen Teilchen umfassen zum Beispiel Oxide wie ZnO, CdO, $SiO_2$, $TiO_2$, $ZrO_2$, $CeO_2$, $SnO_2$, $Al_2O_3$, $In_2O_3$, $La_2O_3$, $Fe_2O_3$, $Cu_2O$, $V_2O_5$, $MoO_3$ oder $WO_3$; Chalkogenide, z.B. Sulfide wie CdS, ZnS, PbS oder $Ag_2S$; Selenide wie GaSe, CdSe oder ZnSe; und Telluride wie ZnTe oder CdTe; Halogenide wie AgCl, AgBr, AgI, CuCl, CuBr, $CdI_2$ oder $PbI_2$; Carbide wie $CdC_2$ oder SiC; Arsenide wie AlAs, GaAs oder GeAs; Antimonide wie InSb; Nitride wie BN, AlN, $Si_3N_4$ oder $Ti_3N_4$; Phosphide wie GaP, InP, $Zn_3P_2$ oder $Cd_3P_2$; Phosphate; Silicate; Zirkonate; Aluminate; Stannate; und entsprechende Mischoxide, z.B. solche mit Perowskitstruktur wie $BaTiO_3$ oder $PbTiO_3$.

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Nukleations- und Wachstumsprozesse, MOCVD-Verfahren und Emulsionsverfahren. Diese Verfahren sind in der Literatur ausführlich beschrieben. Auch die gegebenenfalls vorgenommene Modifizierung der Oberfläche der nanoskaligen Teilchen mit geeigneten funktionellen Gruppen (z.B. polymerisierbaren oder hydrophoben Gruppen) ist literaturbekannt.

Die Herstellung der nanoskaligen Teilchen kann auch in situ in Anwesenheit der flüssigen Matrixphase (oder Teilen davon) erfolgen, beispielsweise unter Verwendung von Sol-Gel-Prozessen.

Der Anteil der nanoskaligen Teilchen im fertiggestellten Stoffgradienten-Kompositmaterial aus nanoskaligen Teilchen und gehärteter Matrixphase liegt im allgemeinen im Bereich von 0,5 bis 80 Gewichts-%, häufiger 1 bis 50 Gewichts-% und bevorzugt 5 bis 30 Gewichts-%.

Die flüssige Matrixphase, in der die nanoskaligen Teilchen dispergiert werden, kann prinzipiell jede beliebige Spezies umfassen, die im ursprünglichen Zustand zu einer für die Diffusion der nanoskaligen Teilchen geeigneten Viskosität führt und sich nach Einstellung eines gewünschten Diffusionsprofils unter Beibehaltung dieses Diffusionsprofils in den festen Zustand überführen läßt. Vorzugsweise erfolgt die Härtung der Matrixphase thermisch und/oder photochemisch.

Dementsprechend umfaßt die Matrixphase vorzugsweise ein polymerisierbares organisches Monomer, Oligomer und/oder Prepolymer und/oder eine zur hydrolytischen Polykondensation befähigte, gegebenenfalls organisch modifizierte anorganische Verbindung. In diesem Zusammenhang soll der Ausdruck "polymerisierbar" nicht nur Spezies umfassen, die durch (radikalische oder ionische) Polymerisation in ein Polymer umwandelbar sind, sondern auch solche, die durch Polyadditions- oder Polykondensationsreaktionen ein Polymer ergeben.

Bei den Polymeren in der gehärteten Matrixphase kann es sich um beliebige bekannte Kunststoffe handeln, z.B. Polyacrylsäure, Polymethacrylsäure, Polyacrylate, Polymethacrylate, Polyolefine, Polystyrol, Polyamide, Polyimide, PolyvinylVerbindungen wie Polyvinylchlorid, Polyvinylalkohol, Polyvinylbutyral, Polyvinylacetat und entsprechende Copolymere, z.B. Poly(ethylen-vinylacetat), Polyester, z.B. Polyethylenterephthalat oder Polydiallylphthalat, Polyarylate, Polycarbonate, Polyether, z.B. Polyoxymethylen, Polyethylenoxid und Polyphenylenoxid, Polyetherketone, Polysulfone, Polyepoxide, Fluorpolymere, z.B. Polytetrafluorethylen, und Organopolysiloxane. Vorzugsweise handelt es sich um transparente Polymere. Bei den obigen organischen Monomeren, Oligomeren oder Prepolymeren handelt es sich dementsprechend vorzugsweise um ein polymerisierbares, ungesättigte Gruppen aufweisendes Monomer, Oligomer oder Prepolymer, das bei einer thermisch oder photochemisch induzierten Polymerisation oder bei einer (gegebenenfalls Säure- oder Basen-katalysierten) Polykondensation bzw. Polyaddition eines der oben genannten Polymeren ergibt.

Spezielle Beispiele für polymerisierbare Monomere, die eine rein organische (Polymer) matrix ergeben sind (Meth) acrylsäure, (Meth)acrylsäureester, (Meth)acrylnitril, Styrol und Styrol-Derivate, Alkene (z.B. Ethylen, Propylen, Buten, Isobuten), halogenierte Alkene (z.B. Tetrafluorethylen, Chlortrifluorethylen, Vinylchlorid, Vinylfluorid, Vinylidenfluorid, Vinylidenchlorid), Vinylacetat, Vinylpyrrolidon, Vinylcarbazol und gemischte derartige Monomere. Auch mehrfach ungesättigte Monomere können vorhanden sein, z.B. Butadien und (Meth)acrylsäureester von Polyolen (z.B. Diolen).

Zusätzlich zu den oder anstelle der obigen (rein) organischen Matrixmaterialien kann die Matrixphase aber auch anorganische bzw. organisch modifizierte anorganische Spezies enthalten. Hierbei sind insbesondere hydrolytisch polykondensierbare Verbindungen von Si, Al, B, Pb, Sn, Ti, Zr, V und Zn, insbesondere solche von Si, Al, Ti und Zr oder Mischungen davon, zu erwähnen. Besonders bevorzugt handelt es sich bei den (gegebenenfalls organisch modifizierten) anorganischen (zumindest) hydrolytisch polykondensierbaren Ausgangsverbindungen um solche von Si, insbesondere solche mit den folgenden allgemeinen Formeln (I) und (II), und entsprechende Vorkondensate:

$$SiX_4 \tag{I}$$

worin die Reste X gleich oder verschieden sind und hydrolysierbare Gruppen oder Hydroxylgruppen bedeuten;

$$R^1{}_a R^2{}_b SiX_{(4-a-b)} \tag{II}$$

worin $R^1$ ein nicht hydrolysierbarer Rest ist, $R^2$ einen eine funktionelle Gruppe tragenden Rest bedeutet, X die vorstehende Bedeutung hat und a und b den Wert 0, 1, 2 oder 3 aufweisen, wobei die Summe (a + b) den Wert 1, 2 oder 3 hat.

In den obigen Formeln sind die hydrolysierbaren Gruppen X beispielsweise Wasserstoff oder Halogen (F, Cl, Br oder I), Alkoxy (vorzugsweise $C_{1-6}$-Alkoxy, wie z.B. Methoxy, Ethoxy, n-Propoxy, i-Propoxy und Butoxy), Aryloxy (vorzugsweise $C_{6-10}$-Aryloxy, wie z.B. Phenoxy), Acyloxy (vorzugsweise $C_{1-6}$-Acyloxy, wie z.B. Acetoxy oder Propio-nyloxy), Alkylcarbonyl (vorzugsweise $C_{2-7}$-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht hydrolysierbare Rest $R^1$ ist beispielsweise Alkyl (vorzugsweise $C_{1-6}$-Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise $C_{2-6}$-Alkenyl, wie z.B. Vinyl, 1-Propenyl, 2-Propenyl und Butenyl), Alkinyl (vorzugsweise $C_{2-6}$-Alkinyl, wie z.B. Acetylenyl und Pro-pargyl) und Aryl (vorzugsweise $C_{6-10}$-Aryl, wie z.B. Phenyl und Naphthyl).

Die genannten Reste $R^1$ und X können gegebenenfalls einen oder mehrere übliche Substituenten, wie z.B. Halogen oder Alkoxy, aufweisen.

Konkrete Beispiele für die funktionellen Gruppen des Restes $R^2$ sind Epoxy-, Hydroxy-, Ether-, Amino-, Monoalkylamino-, Dialkylamino-, Amid-, Carboxy-, Mercapto-, Thioether-, Vinyl-, Acryloxy-, Methacryloxy-, Cyano-, Halogen-, Aldehyd-, Alkylcarbonyl-, Sulfonsäure- und Phosphorsäuregruppen. Diese funktionellen Gruppen sind vorzugsweise über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich zum Beispiel von den oben genannten Alkyl-, Alkenyl- oder Arylresten ab. Die Brückengruppen der Reste $R^2$ enthalten vorzugsweise 1 bis 18, insbesondere 1 bis 8 Kohlenstoffatome.

In der allgemeinen Formel (II) hat a vorzugsweise den Wert 0, 1 oder 2, b hat vorzugsweise den Wert 1 oder 2 und die Summe (a + b) weist vorzugsweise den Wert 1 oder 2 auf.

Besonders bevorzugte hydrolysierbare Silane der allgemeinen Formel (I) sind Tetraalkoxysilane wie Tetraethoxysilan (TEOS) und Tetramethoxysilan. Besonders bevorzugte Organosilane der allgemeinen Formel (II) sind Epoxysilane wie 3-Glycidyloxypropyltrimethoxysilan (GPTS) und über reaktive polymerisierbare Doppelbindungen verfügende Silane wie beispielsweise 3-Methacryloxypropyltrimethoxysilan. Die soeben genannten Silane bzw. deren funktionelle Gruppen sind deshalb bevorzugt, weil sie (nach erfolgter hydrolytischer Polykondensation) zu einer Polyadditions- bzw. Polymerisationsreaktion mit zum Beispiel den oben genannten polymerisierbaren organischen Monomeren, Oligomeren und/oder Prepolymeren herangezogen werden können und/oder mit an der Oberfläche der nanoskaligen Teilchen befindlichen reaktiven Gruppen reagieren und somit zur Immobilisierung (z.B. durch Einbindung in ein Netzwerk) der nanoskaligen Teilchen beitragen können.

Die Hydrolyse und Polykondensation der obigen Verbindungen wird auf herkömmliche Art und Weise durchgeführt, gegebenenfalls in Gegenwart eines sauren oder basischen Kondensationskatalysators wie HCl, $HNO_3$ oder $NH_3$. So können Hydrolyse und Polykondensation beispielsweise unter den (allgemein bekannten) Bedingungen des Sol-Gel-Prozesses erfolgen.

Zur Herstellung der flüssigen Matrixphase mit darin dispergierten nanoskaligen Teilchen geht man vorzugsweise so vor, daß man entweder

(a) die (bereits hergestellten) nanoskaligen Teilchen in einer die Matrix bildende(n) Komponente(n) enthaltenden Lösung dispergiert und anschließend das Lösungsmittel entfernt; oder
(b) die Matrixphase in Anwesenheit der nanoskaligen Teilchen erzeugt; oder
(c) die nanoskaligen Teilchen in Anwesenheit der Matrixphase erzeugt.

Die obige Alternative (a) ist besonders dann von Vorteil, wenn es sich bei den Matrix-bildenden Komponenten um polymerisierbare organische Monomere, Oligomere oder Prepolymere handelt, deren Aggregatzustand bzw. Viskosität (z.B. zähflüssig) keine zufriedenstellende Dispergierung der nanoskaligen Teilchen erlaubt.

Die obige Alternative (b) kommt insbesondere dann zum tragen, wenn es sich bei der Matrixphase um ein Vorkondensat aus beispielsweise den obigen Silan-Verbindungen der Formel (I) und/oder (II) oder um ein Polymer aus einem polymerisierbaren organischen Monomer handelt, während die Alternative (c) z.B. dann von Vorteil sein kann, wenn sowohl Matrixphase als auch nanoskalige Teilchen nach dem Sol-Gel-Verfahren hergestellt werden sollen (siehe z.B. die unten angegebenen Ausführungsbeispiele).

Insbesondere dann, wenn an der Aushärtung der Matrixphase thermisch und/oder photochemisch polymerisierbare bzw. polykondensierbare Verbindungen bzw. funktionelle Gruppen beteiligt sein sollen, enthält die flüssige Matrixphase mit darin dispergierten nanoskaligen Teilchen vorzugsweise zumindest einen Polymerisationsinitiator, der die Polymerisation und Härtung der ungesättigten Verbindung bzw. funktionellen Gruppe thermisch und/oder photochemisch induzieren kann. Als Photoinitiatoren können zum ispiel die im Handel erhältlichen Starter eingesetzt werden. Beispiele hierfür sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure® -Typ; Darocur® 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als thermische Initiatoren kommen unter anderem organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele für derartige thermische Initiatoren sind Dibenzylperoxid, tert-Butylperbenzoat und Azobisisobutyronitril.

Die Polykondensation induzierende Polymerisationskatalysatoren sind z.B. Brönsted-Säuren und -Basen, wie Mineralsäuren oder tertiäre Amine, für die anionische Polykondensation und Lewis-Säuren, wie Metallalkoholate (z.B. Aluminiumalkoholate im Falle von Epoxysilanen), für die kationische Polykondensation.

Bei Beteiligung von Epoxidgruppen (z.B. an der Aushärtung der Matrixphase) ist der Zusatz von Ringöffnungskatalysatoren wie beispielsweise N-Alkylimidazolen von besonderem Vorteil.

Der Polymerisationsinitiator wird gewöhnlich in einer Menge von 0,1 bis 5, vorzugsweise 0,5 bis 3 Gewichts-%, bezogen auf die Dispersion, eingesetzt.

Weiter kann die Dispersion gegebenenfalls andere bei optischen Systemen übliche Additive enthalten, z.B. Farbstoffe, photochrome und thermochrome Stoffe.

Zur Herstellung von optischen Bauteilen kann eine wie oben beschriebene Dispersion beispielsweise auf ein geeignetes Substrat aufgetragen oder in eine Form gegeben werden, worauf man die gerichtete Diffusion der nanoskaligen Teilchen in der Matrixphase ablaufen läßt und anschließend die Matrixphase unter Beibehaltung des Stoffgradienten härtet.

Für die Beschichtung werden vorzugsweise für optische Anwendungen geeignete Substrate ausgewählt, wie beispielsweise Glas, Keramik, Silicium, Metall, Halbleiter-Materialien oder (vorzugsweise transparente) Kunststoffe.

Die Beschichtung kann nach üblichen Methoden erfolgen, z.B. durch Tauchen, Fluten, Rakeln, Gießen, Schleudern, Spritzen oder Aufstreichen. Bevorzugte Schichtdicken (im gehärteten Zustand) liegen bei 0,2 bis 30 µm.

Nach der durch eine Potentialdifferenz verursachten Einstellung des Diffusionsprofils der nanoskaligen Teilchen wird der auf das Substrat aufgebrachte Überzug in Abhängigkeit von der Art des verwendeten Polymerisationsinitiators und der Art der für die Matrixphase eingesetzten Komponenten thermisch und/oder durch Bestrahlung (z.B. mit einem UV-Strahler, einem Laser usw.) gehärtet. Die Härtungsbedingungen (Temperatur, UV-Wellenlänge etc.) richten sich im Fall der Polymerisation ungesättigter Gruppen nach den Zerfallsbedingungen des Polymerisationsinitiators. Die thermische Härtung erfolgt gewöhnlich bei Temperaturen unter 150°C. Sind lediglich anorganische Komponenten an der Härtung der Matrixphase beteiligt, kann die hydrolytische Polykondensation auch bei höheren Temperaturen (z.B. bis zu 500°C) durchgeführt werden.

In Fall der Herstellung von Formkörpern kann man die Dispersion zum Beispiel in geeignete Formen eingießen und dann analog wie oben für die Beschichtung von Substraten beschrieben verfahren.

Wird zum Beispiel eine Beschichtung gewünscht, deren Oberfläche sich leicht reinigen läßt, kann man erfindungsgemäß zum Beispiel so vorgehen, daß man nanoskalige Teilchen mit an der Oberfläche befindlichen hydrophoben Gruppen (z.B. Fluoralkylgruppen) einsetzt und diese in einer hydrophilen Matrix (z.B. einem Vorkondensat auf der Basis der oben angegebenen Silane) dispergiert. Nach erfolgtem Aufbringen auf das Substrat (und gegebenenfalls Entfernung eines Kompatibilisierungsmittels) erfolgt dann eine Wanderung der hydrophoben Teilchen hin zur Grenzfläche mit Luft, so daß sich an dieser Grenzfläche die nanoskaligen Teilchen mit ihren hydrophoben Gruppen anreichern und so zu einer leicht zu reinigenden Niederenergieoberfläche führen. Gleichzeitig führt dies dazu, daß an der Grenzfläche zwischen Beschichtung und Substrat keine bzw. praktisch keine hydrophoben Gruppen mehr vorhanden sind und somit eine gute Haftung zwischen Substrat und Beschichtung resultiert.

Ganz allgemein handelt es sich bei den erfindungsgemäßen optischen Bauteilen (optischen Elementen) vorzugsweise um massive Körper, lichtleitende optische Schichten oder mit Gradientenschichten versehene transparente Substrate.

Das erfindungsgemäße Verfahren eignet sich insbesondere zur Herstellung von allen optischen Bauteilen, in denen ein Stoffgradient gewünscht wird, beispielsweise für optische Linsen mit Gradienten im Brechungsindex. Es kann aber z.B. auch zur Herstellung von strukturierten optischen Bauteilen herangezogen werden. Im letztgenannten Fall geht man beispielsweise so vor, daß man mit Hilfe der Bestrahlung durch eine Maske oder durch Interferenzphänomene eine lokale Photopolymerisation durchführt, die wie oben beschrieben zu einem Konzentrationspotential führt, wobei nanoskalige Teilchen mit an der Oberfläche befindlichen polymerisationsfähigen Gruppen in die belichteten Bereiche wandern und dort durch Polymerisation immobilisiert werden. Nach erfolgter Anreicherung und Immobilisierung in den belichteten Bereichen kann dann die gesamte Matrixphase ausgehärtet werden, zum Beispiel ebenfalls durch Photopolymerisation.

Bei Verwendung eines Lasers als Lichtquelle können über holographische Techniken sowohl periodische Gitterstrukturen als auch Fresnelstrukturen hergestellt werden. Die durch Interferenz auftretenden Intensitätsprofile wirken als Polymerisationssenken.

Die folgenden Beispiele dienen der weiteren Veranschaulichung der vorliegenden Erfindung.

**Beispiel 1**

1 Mol 3-Methacryloxypropyltrimethoxysilan wird 5 Minuten mit 1,5 Mol bidestilliertem Wasser (enthaltend 0,1 Mol HCl) hydrolysiert, um ein Vorkondensat herzustellen. Getrennt werden 0,1 Mol Zirkoniumtetrapropylat zusammen mit 0,1 Mol Methacrylsäure gemischt und 15 Minuten bei Raumtemperatur gerührt und zwecks Erzeugung von nanoskaligen Teilchen zu dem obigen Hydrolysat gegeben, worauf die resultierende Mischung weitere 4 Stunden gerührt wird. Danach werden 0,15 Mol bidestilliertes Wasser zugegeben und es wird weitere 12 Stunden bei Raumtemperatur gerührt. Anschließend erfolgt die Zugabe von 1 Mol Tetraethylenglycoldimethacrylat, gefolgt von der Zugabe von 0,4 Mol-% Photostarter pro vorhandener Doppelbindung. Die Wahl des Photostarters wird von der Wellenlänge der verwendeten Strahlungsquelle bestimmt.

Das lösungsmittelfreie Sol wird in einen zylindrischen Metallbehälter (Platin, Durchmesser 10 mm) gefüllt, der als Anode dient. In dem Zylinder ist zusätzlich ein Golddraht von 50 µm Durchmesser zentriert, der als Kathode dient. Es wird eine Spannung von 110 Volt Gleichstrom angelegt, und das System wird durch die Frontfläche des Zylinders mit einer UV-Lampe (2,2 W/cm$^2$) belichtet. Die stattfindende Polymerisation führt zu einer Erhöhung der Viskosität des Systems. Nach 36 Stunden wird der Golddraht entfernt, indem er langsam aus dem Zylinder herausgezogen wird. Hierbei ist die Lichtquelle abgeschaltet. Nach ca. 10 Minuten hat sich die dadurch bedingte Störung des Systems nivelliert und es wird mit der Belichtung fortgefahren, wobei das Zirkonoxid-Konzentrationsprofil, das sich eingestellt hat, durch die weiterlaufende Polymerisation des Systems eingefroren wird.

Es werden schlierenfreie zylindrische Monolithe erhalten. Über Schleif- und Polierprozesse können Gradientenlinsen mit optischer Wirkung in beliebigen Dicken hergestellt werden. Mittels Ellipsometrie wird ein Brechwerthub zwischen Linsenrand und Linsenzentrum von 0,07 (bei 500 nm) bestimmt.

**Beispiel 2**

Es wird der in Beispiel 1 hergestellte Lack ohne Tetraethylenglycoldimethacrylat eingesetzt. Zur Schichtherstellung werden zwischen zwei Glassubstrate Glasfasern von 10 µm Durchmesser als Abstandshalter eingesetzt. Der Lack wird durch Kapillarkräfte zwischen die Glassubstrate eingebracht.

Eine Seite der so hergestellten Sandwich-Struktur wird mit einer Maske, die einen transparenten Bereich von 20 µm Spaltbreite besitzt, abgedeckt. Das Material zwischen den Glasplatten wird im transparenten Bereich der Maske 10 Minuten mit einer UV-Lampe belichtet. Es baut sich ein Brechwertprofil auf und eine Zylinderlinse von 10 µm Durchmesser wird erzeugt. Das Brechwertprofil wird fixiert, indem die Maske entfernt und der Film zwischen den Glassubstraten mit UV-Licht komplett ausgehärtet wird. Es wird ein maximaler Brechwerthub bei 500 nm von 0,01 bestimmt.

**Beispiel 3**

Beispiel 2 wird wiederholt, jedoch wird nicht durch eine Maske belichtet, sondern es werden über holographisches Zwei-Wellenmischen mit Hilfe von Interferenzeffekten periodische Intensitätsmodulationen erzeugt. Das Material zwischen den Glassubstraten wird mit diesen Intensitätsmodulationen belichtet. Es baut sich eine Gitterstruktur auf, die die gleiche Periodizität besitzt wie die Intensitätsmodulationen. Das Brechwertprofil wird eingefroren, indem einer der im Experiment verwendeten Schreibstrahlen abgeschirmt wird und der verbleibende Strahl zu einer Nachpolymerisation verwendet wird. Auf diese Weise werden Volumenhologramme mit Beugungseffizienzen von 75% erzeugt.

**Beispiel 4**

Im folgenden wird die Darstellung eines Gradientenmaterials durch Beschichtung von Nanopartikeln mit Silanen mit fluorierten Seitenketten und Einbau der modifizierten Nanopulver in eine hydrophile Matrix beschrieben. Zur Minimierung der Gesamtenergie des Systems erfolgt eine Diffusion der Partikel an die Oberfläche. Der Nachweis der Diffusion erfolgte durch Messen der Kontaktwinkel der ausgehärteten Schichten.

**(a) Darstellung der modifizierten Pulver:**

Es werden 5 g Disperal® (Böhmit-Nanopulver mit Primärpartikelgrößen von ca. 15 nm) in 100 ml Toluol gerührt. Nach dreiminütigem Desintegrieren mit Hilfe eines Ultraschall-Desintegrators werden variierende Mengen (je nach gewünschtem Belegungsgrad) an 1H,1H,2H,2H-Perfluoroctyltriethoxysilan (FTS) bei Raumtemperatur unter Rühren zugesetzt.

Die Menge des entsprechenden Modifizierungsagens richtet sich nach der berechneten maximal möglichen Hydroxylgruppendichte auf der Oberfläche der Böhmitteilchen und kann berechnet werden. Kennt man die spezifische Oberfläche des verwendeten Pulvers, die durch Messen der BET-Adsorptionsisothermen experimentell bestimmt wurde, so kann man aus einer Formel näherungsweise die Anzahl der Oberflächen-OH-Gruppen bestimmen. Hierbei wird ein Platzbedarf von 18 $\text{Å}^2$ pro OH-Gruppe vorausgesetzt. Oberfläche des Oxids [$m^2$/g]

$$\text{Anzahl der Oberflächen-OH-Gruppen [1/g]} = \frac{\text{Oberfläche des Oxids [m}^2\text{/g]}}{\text{Platzbedarf einer OH-Gruppe [m}^2\text{]}}$$

Dividiert man die erhaltenen Werte durch die Avogadrosche Konstante $N_A$, erhält man die stöchiometrisch (st) einzusetzende Menge eines Modifizierungsagens in Mol. Die zur Modifikation verwendeten Mengen an Modifizierungsreagenz (FTS) sind in der folgenden Tabelle zusammengefaßt:

| Eingesetzte Mengen FTS | [Mol/5 g AlOOH] | [g/5 g AlOOH] |
|---|---|---|
| 0,25 st | $2{,}006 \cdot 10^{-3}$ | 1,023 |
| 0,50 st | $4{,}013 \cdot 10^{-3}$ | 2,048 |

Anschließend wird das Reaktionsgemisch am Rückflußkühler innerhalb von 10 Minuten unter Rühren auf 100°C aufgeheizt und 5 Stunden bei dieser Temperatur gehalten. Zur Entfernung des Lösungsmittels wird dieses am Rotationsverdampfer (60°C, 30 mbar) abdestilliert. Das Pulver wird noch zweimal mit je 50 ml Toluol gewaschen und 10 Stunden bei 130°C im Trockenschrank getrocknet.

**(b) Darstellung der Sole: Synthese der Sole des Modellsystems aus 3-Glycidyloxypropyltrimethoxysilan (GPTS), Bisphenol A (BPA) und 1-Methylimidazol (MI)**

9,46 g (0,04 Mol) GPTS werden mit 2,16 g 0,1 N HCl 1 Stunde rühren gelassen. Zu dem klaren Vorkondensat gibt man 0,5 g des jeweiligen modifizierten Pulvers und desintegriert 2 Minuten mit einem Ultraschall-Desintegrator. Nach 2 Stunden Rühren setzt man 3,6 g ($16 \cdot 10^{-3}$ Mol) BPA zu und verdünnt mit 10 g Butylenglycol. Nach 1 Stunde Rühren, wobei sich das BPA vollständig auflöst, werden 0,16 g ($2 \cdot 10^{-3}$ Mol) 1-Methylimidazol (MI) als Starter zugesetzt und es wird innerhalb von 30 Minuten beschichtet.

**(c) Herstellung von Beschichtungen:**

Als Substrate werden Objektträger (OT) verwendet. Die OT's werden mit einer Tauchmaschine, die die Substrate mit definierter Geschwindigkeit aus dem Sol zieht, beidseitig beschichtet (Tauchbeschichtung).

Die thermische Aushärtung der Schichten erfolgt in vorgeheizten Öfen bei einer Temperatur von 130°C. Nach einer Stunde werden die ausgehärteten Schichten entnommen und an der Luft auf Raumtemperatur abkühlen gelassen.

**(d) Charakterisierung:**

Die Haftung wurde bei allen hergestellten Beschichtungen mit Gitterschnitt (GT) (0-1) und Tape-Test (O-1) bewertet.

Die Ritzhärte der (durchgängig transparenten) Schichten lag je nach Schichtdicke (5 - 10 μm) bei 1 - 3 g Vickershärte.

In der folgenden Tabelle ist eine Übersicht der gemessenen Kontaktwinkel in Abhängigkeit von der Fluorsilan (FTS)-Konzentration dargestellt.

| FTS-Gehalt des AlOOH-Pulvers | Kontaktwinkel gegen $H_2O$ [°] mit Partikel |
|---|---|
| ohne | 68 |
| 0,25 st | 90 |
| 0,5 st | 95 |

Aus den Kontaktwinkeln erkennt man, daß mit Einbau von 0,25 st FTS-modifizierten Pulvern der Kontaktwinkel der ausgehärteten Schichten von 68° auf 90° ansteigt und mit 0,5 st FTS-modifizierten Pulvern ein weiterer Anstieg auf 95° zu erreichen ist. Diese Werte belegen eine Anreicherung der fluorierten Seitenketten an der Oberfläche der Schichten.

**Beispiel 5**

Dieses Beispiel beschreibt die Darstellung eines Gradientenmaterials durch eine in situ-Beschichtung von Nanopartikeln durch FTS im System GPTS/BPA/MI/AlOOH. Die Anbindung des FTS an die Partikeloberfläche erfolgt dabei durch die Systemenergieminimierung bei der Adsorption und Ausrichtung der fluorierten Spezies an hydrophilen Oberflächen. Diese wird durch die große OH-Gruppendichte an den AlOOH-Partikeln zur Verfügung gestellt.

**(a) Darstellung von GPTS/BPA/MI/AlOOH-Solen mit unterschiedlichen Konzentrationen an FTS**

4,73 g (0,02 Mol) GPTS werden mit 1,62 g 0,1 N HCl versetzt und 30 Minuten gerührt. Man gibt 0,58 g Disperal® Sol P3 (Böhmitnanopartikel, ca. 10 nm Primärpartikelgröße) als Feststoff zu und läßt 10 Stunden rühren. Die wenig transluzenten Suspensionen werden noch 2 Minuten desintegriert und danach mit FTS-Konzentrationen zwischen 0,1 und 7 Mol-% versetzt. Die zugegebenen Mengen an FTS sind bezogen auf das eingesetzte GPTS in der folgenden Tabelle aufgeführt:

| Eingesetzte Menge an FTS [Mol-%] | Eingesetzte Menge an FTS [g] |
|---|---|
| 0,1 | 0,005 |
| 0,25 | 0,013 |
| 0,5 | 0,025 |
| 0,75 | 0,038 |
| 1 | 0,051 |
| 2 | 0,102 |
| 3 | 0,153 |
| 4 | 0,204 |
| 5 | 0,255 |
| 6 | 0,306 |
| 7 | 0,357 |

Die Sole werden mit jeweils 0,08 g (1 · $10^{-3}$ Mol) 1-Methylimidazol als Starter versetzt und innerhalb von 30 Minuten weiterverarbeitet.

**(b) Herstellung von Beschichtungen:**

Beschichtung und thermische Aushärtung erfolgen wie in Beispiel 4 beschrieben.

**(c) Charakterisierung:**

Die Charakterisierung erfolgt wie in Beispiel 4 beschrieben.

Die Ritzhärte der (durchgängig transparenten) Schichten lag je nach Schichtdicke (5 - 10 µm) bei 1 - 3 g Vickershärte

Bis zu einer FTS-Konzentration von 1 Mol-% steigt der Kontaktwinkel fast linear mit der Zugabe von FTS. Danach beginnt die Absättigung der Oberfläche mit fluorierten Seitenketten. Bei 7 Mol-% wird ein Kontaktwinkel von 115° mit Wasser erreicht.

Man erkennt auch bei der in situ-Anbindung bei guten Benetzungs- und Haftungseigenschaften eine drastische Erhöhung der Kontaktwinkel gegen $H_2O$, was den Fluorgradienten der Schicht belegt. Bei einer Gleichverteilung durch die Schicht muß mit drastischen Benetzungs- und Haftungsproblemen gerechnet werden, was vergleichende Untersuchungen ohne AlOOH gezeigt haben, da dort das FTS nur an der Oberfläche des Substrates Adsorptionsfläche zur Verfügung hat.

Zur Berechnung der Oberflächenenergie wurden mit einem Goniometer die Kontaktwinkel gegen Glycerin, 1-Octanol, Hexadecan und Wasser auf den beschichteten OT's bestimmt und gemäß dem Auswertungsverfahren nach Wu wurden die Oberflächenenergien bei den verschiedenen Fluorsilangehalten ermittelt. Bei der graphischen Auftragung der Werte erkennt man die Erniedrigung der Oberflächenenergie mit steigendem Gehalt an FTS von 42 mJ/m$^2$ (0 Mol-%) auf 19 mJ/m$^2$ (7 Mol-%), was auf eine Sättigung der Oberfläche mit fluorierten Seitenketten schließen läßt. Damit werden ähnliche Oberflächeneigenschaften wie bei Teflon® (ca. 23 mJ/m$^2$) mit weitaus geringerem Fluorgehalt erreicht.

**Patentansprüche**

1. Optisches Bauteil mit nanoskaligen Teilchen, die in einer festen Matrix eingebettet sind, gekennzeichnet durch eine Gradientenstruktur, in der ein Konzentrationsgradient der nanoskaligen Teilchen vorliegt.

2. Verfahren zur Herstellung eines optischen Bauteils nach Anspruch 1, bei dem man in einer flüssigen, härtbaren Matrixphase dispergierte nanoskalige Teilchen unter Ausbildung eines Konzentrationsgradienten dieser Teilchen auf Grund einer Potentialdifferenz in der Matrixphase wandern läßt und anschließend die Matrixphase unter Beibehaltung des Konzentrationsgradienten härtet.

3. Verfahren nach Anspruch 2, bei dem die Potentialdifferenz durch Anlegen eines elektrischen Feldes erzeugt wird.

4. Verfahren nach Anspruch 2, bei dem die Potentialdifferenz eine chemische Potentialdifferenz, vorzugsweise hervorgerufen durch einen Konzentrationsgradienten, ist.

5. Verfahren nach Anspruch 2, bei dem die Potentialdifferenz auf unterschiedlichen Grenzflächenpotentialen beruht, vorzugsweise hervorgerufen durch nanoskalige Teilchen mit hydrophoben Oberflächengruppen in einer hydrophile(re)n Matrixphase.

6. Verfahren nach irgendeinem der Ansprüche 2 bis 5, bei dem die nanoskaligen Teilchen einen Durchmesser von nicht mehr als 50 nm, vorzugsweise nicht mehr als 20 nm, aufweisen.

7. Verfahren nach irgendeinem der Ansprüche 2 bis 6, bei dem die nanoskaligen Teilchen Oxide, Chalkogenide, Halogenide, Carbide, Arsenide, Antimonide, Nitride, Phosphide, Phosphate, Silicate, Titanate, Zirkonate, Stannate, Aluminate und/oder entsprechende Mischoxide umfassen.

8. Verfahren nach irgendeinem der Ansprüche 2 bis 7, bei dem die flüssige Matrixphase ein polymerisierbares organisches Monomer und/oder Oligomer und/oder Prepolymer und/oder ein hydrolysierbares Silan der allgemeinen Formel (I) oder (II) und/oder ein davon abgeleitetes Vorkondensat umfaßt:

$$SiX_4 \hspace{6cm} (I)$$

in der die Reste X gleich oder verschieden sind und hydrolysierbare Gruppen oder Hydroxylgruppen bedeuten;

$$R^1{}_a R^2{}_b SiX_{(4-a-b)} \hspace{5cm} (II)$$

worin $R^1$ ein nicht hydrolysierbarer Rest ist, $R^2$ einen eine funktionelle Gruppe tragenden Rest bedeutet, X die vorstehende Bedeutung hat und a und b den Wert 0, 1, 2 oder 3 aufweisen, wobei die Summe (a + b) den Wert 1, 2 oder 3 aufweist.

9. Verfahren nach irgendeinem der Ansprüche 2 bis 8, bei dem der flüssigen Matrixphase ein thermischer und/oder photochemischer Polymerisationsinitiator einverleibt wird und die Härtung der Matrixphase thermisch und/oder photochemisch erfolgt.

10. Verfahren nach irgendeinem der Ansprüche 2 bis 9, bei dem man zur Herstellung der flüssigen Matrixphase mit darin dispergierten nanoskaligen Teilchen entweder

    (a) die nanoskaligen Teilchen in einer die Matrix bildende(n) Komponente(n) enthaltenden Lösung dispergiert und anschließend das Lösungsmittel entfernt; oder
    (b) die Matrixphase in Anwesenheit der nanoskaligen Teilchen erzeugt; oder
    (c) die nanoskaligen Teilchen in Anwesenheit der Matrixphase erzeugt.

11. Verfahren nach irgendeinem der Ansprüche 2 bis 10, bei dem man die flüssige Matrixphase mit darin dispergierten nanoskaligen Teilchen auf ein transparentes Substrat aufträgt und nach Aufbau des Konzentrationsgradienten der Teilchen die Matrixphase thermisch und/oder photochemisch härtet.

12. Verfahren nach irgendeinem der Ansprüche 2 bis 10, bei dem man die flüssige Matrixphase mit darin dispergierten nanoskaligen Teilchen in eine Form gibt und nach Aufbau des Konzentrationsgradienten der Teilchen die Matrixphase thermisch und/oder photochemisch härtet.

13. Verfahren nach Anspruch 11, bei dem der Konzentrationsgradient durch Wanderung von nanoskaligen Teilchen mit hydrophoben Oberflächengruppen zur Grenzfläche hydrophile(re) Matrixphase/Luft hin hervorgerufen wird.

14. Verfahren nach irgendeinem der Ansprüche 2 bis 13, das zur Herstellung von optischen Linsen mit Gradienten im Brechungsindex eingesetzt wird.

15. Verfahren nach irgendeinem der Ansprüche 2 bis 13, bei dem durch Anwendung von Mikrostrukturierungsmethoden bei der Erzeugung von durch Polymerisation hervorgerufenen Konzentrationsgradienten mikrooptische Komponenten hergestellt werden.

16. Verfahren nach irgendeinem der Ansprüche 2 bis 15, bei dem es sich bei den optischen Bauteilen um massive Körper, lichtleitende optische Schichten oder mit Gradientenschichten versehene transparente Substrate handelt.

**Claims**

1. Optical component with nanoscale particles embedded in a solid matrix, characterized by a gradient structure, in which there is a concentration gradient os said nanoscale particles.

2. Process for producing an optical component according to Claim 1, in which nanoscale particles dispersed in a liquid, curable matrix phase are caused to migrate in the matrix phase on the basis of a potential difference, forming a concentration gradient, and the matrix phase is subsequently cured with retention of the concentration gradient.

3. Process according to Claim 2, in which the potential difference is generated by applying an electrical field.

4. Process according to Claim 2, in which the potential difference is a chemical potential difference, preferably induced by a concentration gradient.

5. Process according to Claim 2, in which the potential difference is based on different interface potentials, preferably induced by nanoscale particles with hydrophobic surface groups in a (more) hydrophilic matrix phase.

6. Process according to any one of Claims 2 to 5, in which the nanoscale particles have a diameter of not more than 50 nm, preferably not more than 20 nm.

7. Process according to any one of Claims 2 to 6, in which the nanoscale particles comprise oxides, chalcogenides, halides, carbides, arsenides, antimonides, nitrides, phosphides, phosphates, silicates, titanates, zirconates, stannates, aluminates and/or corresponding mixed oxides.

8. Process according to any one of Claims 2 to 7, in which the liquid matrix phase comprises a polymerizable organic monomer and/or oligomer and/or prepolymer and/or a hydrolysable silane of the general formula (I) or (II) and/or a precondensate derived therefrom:

$$SiX_4 \hspace{4cm} (I)$$

in which the radicals X are identical or different and are hydrolysable groups or hydroxyl groups;

$$R^1{}_aR^2{}_bSiX_{(4-a-b)} \hspace{4cm} (II)$$

in which $R^1$ is a non-hydrolysable radical, $R^2$ is a radical which carries a functional group, X is as defined above and a and b have the value 0, 1, 2 or 3, the sum (a + b) having the value 1, 2 or 3.

9. Process according to any one of Claims 2 to 8, in which a thermal and/or photochemical polymerization initiator is incorporated into the liquid matrix phase, and the matrix phase is cured thermally and/or photochemically.

10. Process according to any one of Claims 2 to 9, in which in order to prepare the liquid matrix phase with nanoscale particles dispersed therein either

(a) the nanoscale particles are dispersed in a solution containing the matrix-forming component(s) and then the solvent is removed; or
(b) the matrix phase is generated in the presence of the nanoscale particles; or
(c) the nanoscale particles are generated in the presence of the matrix phase.

11. Process according to any one of Claims 2 to 10, in which the liquid matrix phase with nanoscale particles dispersed therein is applied to a transparent substrate and, after the concentration gradient has been built up, the matrix phase is thermally and/or photochemically cured.

12. Process according to any one of Claims 2 to 10, in which the liquid matrix phase with nanoscale particles dispersed therein is placed in a mould and, after the concentration gradient has been built up, the matrix phase is thermally and/or photochemically cured.

13. Process according to Claim 11, in which the concentration gradient is brought about by migration of nanoscale particles with hydrophobic surface groups towards the (more) hydrophilic matrix phase/air interface.

14. Process according to any one of Claims 2 to 13, which is employed to produce optical lenses with a refractive index gradient.

15. Process according to any one of Claims 2 to 13, in which microoptical components are produced by employing microstructuring methods when generating concentration gradients brought about by polymerization.

16. Process according to any one of Claims 2 to 15, in which the optical components comprise solid structures, photoconductive optical layers, or transparent substrates provided with gradient layers.

**Revendications**

1. Composant optique contenant des nanoparticules incorporées dans une matrice solide, caractérisé par une structure à gradient avec un gradient de concentration de nanoparticules.

2. Procédé de fabrication d'un composant optique selon la revendication 1, dans lequel on fait migrer, grâce à une différence de potentiel dans une phase matricielle, des nanoparticules dispersées dans une phase matricielle liquide, durcissable de manière à former un gradient de concentration de ces particules, et on fait ensuite durcir la phase matricielle de manière à conserver le gradient de concentration.

3. Procédé selon la revendication 2, dans lequel on crée la différence de potentiel par application d'un champ électrique.

4. Procédé selon la revendication 2, dans lequel la différence de potentiel est une différence de potentiel chimique résultant de préférence d'un gradient de concentration.

5. Procédé selon la revendication 2, dans lequel la différence de potentiel résulte d'une différence de potentiel d'interface, de préférence créée par des nanoparticules à groupes de surface hydrophobes dans une phase matricielle hydrophile (ou plus hydrophile).

6. Procédé selon l'une quelconque des revendications 2 à 5, dans lequel les nanoparticules ont un diamètre n'excédant pas 50 nm, de préférence pas 20 nm.

7. Procédé selon l'une quelconque des revendications 2 à 6, dans lequel les nanoparticules englobent des oxydes, des chalcogénures, des halogénures, des carbures, des arséniures, des antimoniures, des nitrures, des phosphures, des phosphates, des silicates, des titanates, des zirconates, des stannates, des aluminates et/ou les oxydes mixtes correspondants.

8. Procédé selon l'une quelconque des revendications 2 à 7, dans lequel la phase matricielle liquide est un monomère et/ou un oligomère et/ou un prépolymère organique polymérisable et/ou un silane hydrolysable correspondant aux formules générales (I) ou (II), et/ou un produit de précondensation dérivé d'un tel silane :

$$(I) \qquad SiX_4$$

dans laquelle les groupes X sont identiques ou différents et représentent chacun un groupe hydrolysable ou un groupe hydroxyle ;

$$(II) \qquad R^1{}_a R^2{}_b SiX_{(4-a-b)}$$

dans laquelle $R^1$ représente un résidu non hydrolysable, $R^2$ représente un résidu porteur d'un groupe fonctionnel, X a la signification indiquée ci-dessus et a et b valent 0, 1, 2 ou 3, la somme (a + b) étant égale à 1, 2 ou 3.

9. Procédé selon l'une quelconque des revendications 2 à 8, dans lequel on incorpore dans la phase matricielle liquide un amorceur de polymérisation thermique et/ou photochimique et dans lequel le durcissement de la phase matricielle se fait par voie thermique et/ou photochimique.

10. Procédé selon l'une quelconque des revendications 2 à 9, dans lequel, pour préparer la phase matricielle liquide contenant des nanoparticules dispersées dans celle-ci,

(a) on disperse les nanoparticules dans une solution contenant le(s) composant(s) formant la matrice, puis on élimine le solvant, ou bien
(b) on forme la phase matricielle en présence des nanoparticules, ou bien
(c) on forme les nanoparticules en présence de la phase matricielle.

**11.** Procédé selon l'une quelconque des revendications 2 à 10, dans lequel on applique la phase matricielle liquide contenant les nanoparticules sous forme dispersée sur un substrat transparent et, après établissement du gradient de concentration de particules, on fait durcir la phase matricielle par voie thermique et/ou photochimique.

**12.** Procédé selon l'une quelconque des revendications 2 à 10, dans lequel on introduit la phase matricielle liquide contenant les nanoparticules sous forme dispersée dans un moule et, après établissement du gradient de concentration de particules, on fait durcir la phase matricielle par voie thermique et/ou photochimique.

**13.** Procédé selon la revendication 11, dans lequel on crée le gradient de concentration par migration de nanoparticules portant des groupes de surface hydrophobes, vers l'interface entre la phase matricielle hydrophile (ou plus hydrophile) et l'air.

**14.** Procédé selon l'une quelconque des revendications 2 à 13, que l'on utilise pour la fabrication de lentilles optiques à gradient d'indice de réfraction.

**15.** Procédé selon l'une quelconque des revendications 2 à 13, dans lequel on fabrique des composants microoptiques par application de méthodes de microstructuration par établissement de gradients de concentration résultant d'une polymérisation.

**16.** Procédé selon l'une quelconque des revendications 2 à 15, dans lequel les composants optiques sont des pièces massives, des couches optiques photoconductrices ou des substrats transparents pourvus de couches à gradient.